# EUROPEAN PATENT APPLICATION

(11) **EP 4 804 248 A1**
(43) Date of publication of application: **09.09.2026**
(21) Application number: 26153103.2
(22) Date of filing: 21.01.2026
(51) Int. Cl.: H01M 4/136, H01M 4/1397, H01M 4/38, H01M 4/58, H01M 4/62, H01M 4/36

(54) **CATHODE COMPOSITE AND PRODUCTION METHOD FOR THE SAME**

(30) Priority: 07.03.2025 JP 2025036746
(71) Applicant: Toyota Jidosha Kabushiki Kaisha, Toyota-shi, Aichi-ken 471-8571 (JP)
(72) Inventor: ASAKURA, Ryo, Toyota-shi, Aichi-ken, 471-857 (JP); SHIOTANI, Shinya, Toyota-shi, Aichi-ken, 471-8571 (JP)
(74) Representative: Winter, Brandl - Partnerschaft mbB

(57) **Abstract**

A cathode composite of the present disclosure contains a sulfur-based active material, a Li-containing sulfide, a P-containing sulfide, and carbon. A molar ratio Li/P of Li to P in the cathode composite is 1.70 or more and 3.30 or less, and a molar ratio Li/S of Li to S in the cathode composite is more than 0.25 and less than 0.50. By using the cathode composite of the present disclosure to form a battery, the battery is likely to have both high capacity and good cycle characteristics.

## Description

### BACKGROUND OF THE INVENTION

### 1. Field of the Invention

The present application discloses a cathode composite and a production method for the cathode composite.

### 2. Description of Related Art

Japanese Unexamined Patent Application Publication No. 2019-212615 (JP 2019-212615 A) discloses a battery using a cathode composite containing a sulfur-based cathode active material.

### SUMMARY OF THE INVENTION

The battery using the cathode composite containing the sulfur-based cathode active material has room for improvement in terms of achieving both high capacity and good cycle characteristics.

The present application discloses the following aspects to address the above issue.

### First Aspect

A cathode composite including a sulfur-based active material, a Li-containing sulfide, a P-containing sulfide, and carbon, in which
a molar ratio Li/P of Li to P in the cathode composite is 1.70 or more and 3.30 or less, and
a molar ratio Li/S of Li to S in the cathode composite is more than 0.25 and less than 0.50.

### Second Aspect

The cathode composite according to the first aspect, further including:
D10 that is 1.0 µm or more and less than 3.0 µm;
D50 that is 3.0 µm or more and less than 6.0 µm; and
D90 that is 6.0 µm or more and 10.0 µm or less.

### Third Aspect

The cathode composite according to the first or second aspect, in which a ³¹P solid-state NMR spectrum of the cathode composite satisfies a relationship (1): $I 1 / I 2 \leq 1.0$
where I1 is an integrated intensity of a peak derived from P₂S₆⁴⁻, and
I2 is an integrated intensity of a peak derived from PS₄³⁻.

### Fourth Aspect

The cathode composite according to any one of the first to third aspects, in which a molar ratio C/S of C to S in the cathode composite is 0.50 or more and 1.50 or less.

### Fifth Aspect

A production method for a cathode composite, the production method including mixing a sulfur-based active material, a Li-containing sulfide, a P-containing sulfide, and carbon to obtain a mixture, in which
a molar ratio Li/P of Li to P in the mixture is 1.70 or more and 3.30 or less, and
a molar ratio Li/S of Li to S in the mixture is more than 0.25 and less than 0.50.

When the cathode composite of the present disclosure is used to form a battery, the battery is likely to have both high capacity and good cycle characteristics.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 schematically shows an example of the configuration of a battery including a cathode composite of the present disclosure;
FIG. 2 shows X-ray diffraction patterns of cathode composites of Comparative Examples and Example;
FIG. 3A shows ³¹P solid-state NMR spectrum of the cathode composite of Comparative Example 1;
FIG. 3B shows ³¹P solid-state NMR spectrum of the cathode composite of Example 3;
FIG. 3C shows ³¹P solid-state NMR spectrum of the cathode composite of Comparative Example 7;
FIG. 4 schematically shows the configuration of a press cell of each of Comparative Examples and Example;
FIG. 5A shows ³¹P solid-state NMR spectrum of the cathode composite of Comparative Example 1 after conditioning;
FIG. 5B shows ³¹P solid-state NMR spectrum of the cathode composite of Example 3 after conditioning; and
FIG. 6 shows cycle characteristics of the press cells of Comparative Examples and Example.

### DETAILED DESCRIPTION OF EMBODIMENTS

Hereinafter, a cathode composite and a production method for the cathode composite according to one embodiment of the present disclosure will be described. The cathode composite and the production method for the cathode composite according to the present disclosure are not limited to the embodiment described below.

### 1. Cathode Composite

The cathode composite according to the present embodiment contains a sulfur-based active material, a Li-containing sulfide, a P-containing sulfide, and carbon. A molar ratio Li/P of Li to P in the cathode composite is 1.70 or more and 3.30 or less. A molar ratio Li/S of Li to S in the cathode composite is more than 0.25 and less than 0.50.

### 1.1 Sulfur-based Active Material

The cathode composite according to the present embodiment contains the sulfur-based active material. The sulfur-based active material may be any material that reacts with Li ions that are charge compensation ions during discharging to produce a compound containing sulfur and lithium (e.g., a sulfide such as Li₂S) as a discharge product, and releases Li ions during charging. The sulfur-based active material may contain elemental sulfur or may be composed of elemental sulfur. The elemental sulfur may be octasulfur (S₈) or any other sulfur. Octasulfur (S₈) may be α-sulfur, β-sulfur, γ-sulfur, or a combination thereof. The sulfur-based active material contained in the cathode composite may be dissolved in the P-containing sulfide described later, or may be chemically bonded to the P-containing sulfide. For example, S in the sulfur-based active material and S in the P-containing sulfide may be chemically bonded to each other. The shape of the sulfur-based active material contained in the cathode composite is not particularly limited, and may be, for example, a particulate or indefinite shape. Whether the cathode composite contains the sulfur-based active material can be determined by subjecting the cathode composite to various analyses such as XAFS, XRD, or NMR. The amount of the sulfur-based active material contained in the cathode composite is adjusted to satisfy the molar ratio Li/S described later.

### 1.2 Li-containing Sulfide

The cathode composite according to the present embodiment contains the Li-containing sulfide. In the cathode composite containing the Li-containing sulfide and having the molar ratios Li/P and Li/S described later within predetermined ranges, an ion conduction phase is likely to be formed in an appropriate amount and in a highly dispersed state. Therefore, bias in ion conduction paths may be suppressed, and the capacity and the cycle characteristics may be improved. Alternatively, the cathode composite containing the Li-containing sulfide and having the molar ratios Li/P and Li/S described later within the predetermined ranges is likely to have fine ion conductive particles, and the particle size distribution of the cathode composite is likely to be shifted overall toward smaller particle sizes compared to a cathode composite that does not contain the Li-containing sulfide or a cathode composite that excessively contains the Li-containing sulfide. Therefore, bias in ion conduction paths and electron conduction paths may be suppressed, and the capacity and the cycle characteristics may be improved. The Li-containing sulfide is a compound containing Li, S, and an optional element as constituent elements. The Li-containing sulfide may be, for example, Li₂S. The Li-containing sulfide may be chemically bonded to the P-containing sulfide described later. The shape of the Li-containing sulfide contained in the cathode composite is not particularly limited, and may be, for example, a particulate or indefinite shape. Whether the cathode composite contains the Li-containing sulfide can be determined by subjecting the cathode composite to various analyses such as XAFS, XRD, or NMR. The amount of the Li-containing sulfide contained in the cathode composite is adjusted to satisfy the molar ratios Li/P and Li/S described later.

### 1.3 P-containing Sulfide

The cathode composite according to the present embodiment contains the P-containing sulfide. The P-containing sulfide contributes to the formation of the ion conduction phase in the cathode composite. The P-containing sulfide is a compound containing P, S, and an optional element as constituent elements. The P-containing sulfide contains at least P and S as constituent elements, and may further contain another element M. Examples of the other element M include one or more of Ge, Sn, Si, B, and Al. The P-containing sulfide may contain P, S, and the optional element M as constituent elements, and need not contain Li. The P-containing sulfide may contain a sulfide composed of P and S (e.g., P₂S₅). The P-containing sulfide may have an ortho structure of the P element (PS₄ structure). The P-containing sulfide may be bonded to the sulfur-based active material or the Li-containing sulfide to become amorphous, and may be present as PS₃⁴⁻, P₂S₆⁴⁻, or P₂S₇⁴⁻. The shape of the P-containing sulfide contained in the cathode composite is not particularly limited, and may be, for example, a particulate or indefinite shape. Whether the cathode composite contains the P-containing sulfide can be determined by subjecting the cathode composite to various analyses such as XAFS, XRD, or NMR. The amount of the P-containing sulfide contained in the cathode composite is adjusted to satisfy the molar ratio Li/P described later.

### 1.4 Carbon

The cathode composite according to the present embodiment contains carbon. Carbon functions as a conductive material in the cathode composite. Carbon is, for example, elemental carbon. Carbon may be one or more of carbon nanotubes, vapor grown carbon fibers (VGCF), acetylene black, furnace black, ketjen black, activated carbon, and graphene. In particular, when the cathode composite contains carbon nanotubes, high performance is likely to be ensured. The amount of carbon contained in the cathode composite is not particularly limited, and may be determined as appropriate depending on intended battery performance. In one embodiment, the carbon content in the cathode composite may be more than 0 mass% and 50 mass% or less, 5 mass% or more and 40 mass% or less, or 10 mass% or more and 30 mass% or less. Alternatively, the amount of carbon contained in the cathode composite may be adjusted to satisfy a molar ratio C/S described later.

### 1.5 Other Components

The cathode composite may contain other components than the above. The contents of the other components in the cathode composite are not particularly limited. The cathode composite may contain the sulfur-based active material, the Li-containing sulfide, the P-containing sulfide, and carbon at 90 mass% or more, 95 mass% or more, or 99 mass% or more in total.

### 1.6 Molar Ratios Li/P and Li/S

In the present embodiment, the molar ratio Li/P of Li to P and the molar ratio Li/S of Li to S in the cathode composite are within the predetermined ranges, and thus both high capacity and good cycle characteristics are likely to be achieved. The molar ratio Li/P is 1.70 or more and 3.30 or less, and the molar ratio Li/S is more than 0.25 and less than 0.50. The molar ratio Li/P may be 1.90 or more, 2.00 or more, 2.10 or more, 2.20 or more, 2.30 or more, or 2.40 or more, and may be 3.20 or less, 3.10 or less, 3.00 or less, 2.90 or less, or 2.80 or less. In particular, when the molar ratio Li/P is 2.00 or more and 3.00 or less, a higher effect is likely to be ensured. The molar ratio Li/S may be 0.26 or more, 0.27 or more, 0.28 or more, 0.29 or more, 0.30 or more, 0.31 or more, 0.32 or more, 0.33 or more, 0.34 or more, 0.35 or more, 0.36 or more, or 0.37 or more, and may be 0.49 or less, 0.48 or less, 0.47 or less, 0.46 or less, 0.45 or less, 0.44 or less, 0.43 or less, or 0.42 or less. In particular, when the molar ratio Li/S is 0.30 or more and 0.45 or less, a higher effect is likely to be ensured. The molar ratio Li/P and the molar ratio Li/S can be determined by analyzing the types and amounts of elements contained in the cathode composite.

### 1.7 Molar Ratio C/S

As described above, the cathode composite according to the present embodiment contains carbon. The molar ratio C/S of C to S in the cathode composite is not particularly limited, and may be, for example, 0.50 or more and 1.50 or less. The molar ratio C/S may be 0.60 or more, 0.70 or more, 0.80 or more, or 0.90 or more, and may be 1.40 or less, 1.30 or less, 1.20 or less, 1.10 or less, or 1.00 or less. In particular, when the molar ratio C/S is 0.80 or more and 1.00 or less, higher performance is likely to be ensured. The molar ratio C/S can be determined by analyzing the types and amounts of elements contained in the cathode composite.

### 1.8 Particle Size Distribution

The cathode composite according to the present embodiment may have a particle size distribution. For example, the cathode composite according to one embodiment may have D10 that is 1.0 µm or more and less than 3.0 µm, D50 that is 3.0 µm or more and less than 6.0 µm, and D90 that is 6.0 µm or more and 10.0 µm or less. D10 may be 2.0 µm or more and 2.8 µm or less, or 2.2 µm or more and 2.6 µm or less, D50 may be 4.4 µm or more and 5.2 µm or less, or 4.6 µm or more and 5.0 µm or less, and D90 may be 8.0 µm or more and 10.0 µm or less, or 9.0 µm or more and 10.0 µm or less. D10 refers to a particle size at an integrated value of 10% in the volume-based particle size distribution measured by a laser diffraction/scattering method, D50 refers to a particle size at an integrated value of 50% in the volume-based particle size distribution measured by the laser diffraction/scattering method, and D90 refers to a particle size at an integrated value of 90% in the volume-based particle size distribution measured by the laser diffraction/scattering method.

### 1.9 ³¹P Solid-state NMR Spectrum

In the ³¹P solid-state NMR spectrum of the cathode composite according to the present embodiment, the integrated intensity of the peak derived from P₂S₆⁴⁻ may be equal to or less than a certain level with respect to the integrated intensity of the peak derived from PS₄³⁻. For example, the ³¹P solid-state NMR spectrum of the cathode composite according to one embodiment may satisfy the following relationship (1): $I 1 / I 2 \leq 1.0$
I1: integrated intensity of peak derived from P₂S₆⁴⁻
I2: integrated intensity of peak derived from PS₄³⁻

The above relationship (1) means that a certain amount or more of the ion conduction phase is formed in the cathode composite. Therefore, the ion conductivity of the cathode composite is further improved, and the capacity and the cycle characteristics are likely to be further improved. In the above relationship (1), the lower limit of I1/I2 is not particularly limited. I1/I2 may be more than 0, 0.1 or more, 0.2 or more, 0.3 or more, 0.4 or more, or 0.5 or more. In the ³¹P solid-state NMR spectrum of the cathode composite, I1/I2 may be more than 0 and 1.0 or less, 0.3 or more and 0.9 or less, or 0.5 or more and 0.8 or less.

The conditions for acquiring the ³¹P solid-state NMR spectrum of the cathode composite are as follows.
(I) About 25 µL of the cathode composite (powder form) is placed in a 3.2 mm solid-state NMR sample tube under an Ar atmosphere.
(II) Using ECA-500FT-NMR manufactured by JEOL Ltd., ³¹P solid-state NMR measurement is performed at room temperature under the following conditions.
   Probe: 3.2 mm CPMAS probe
   Magnetic field strength: 11.747 T (202.4 MHz with ³¹P nucleus)
   Observation frequency range: -450 ppm to 550 ppm
   Number of data points: 2048 points
   Measurement mode: single pulse
   Repeat time: 300 seconds
   Number of integrations: 64 (measurement for 5.5 hours)
   Reference substance: ammonium dihydrogen phosphate (external standard: 1.33 ppm)
   MAS rotation speed: 18 kHz
(III) After the ³¹P solid-state NMR measurement is performed to obtain a spectrum, baseline correction is performed, and then waveform separation using a Gaussian function and calculation of the integrated intensities of the peaks are performed to determine I1 and I2. In the ³¹P solid-state NMR spectrum obtained under the above conditions, the peak derived from P₂S₆⁴⁻ appears at 105 ppm to 115 ppm, and the peak derived from PS₄³⁻ appears at 80 ppm to 84 ppm.

### 2. Production Method for Cathode Composite

The cathode composite according to the present embodiment can be produced, for example, by the following method. That is, the production method for the cathode composite according to one embodiment includes mixing the sulfur-based active material, the Li-containing sulfide, the P-containing sulfide, and carbon to obtain a mixture. The molar ratio Li/P of Li to P in the mixture is 1.70 or more and 3.30 or less, and the molar ratio Li/S of Li to S in the mixture is more than 0.25 and less than 0.50.

In the present embodiment, the components may be mixed to satisfy the molar ratios Li/P and Li/S. In the production method according to the present embodiment, mixing is performed, for example, by applying mechanical energy to the components. In one embodiment, for example, the sulfur-based active material, the Li-containing sulfide, the P-containing sulfide, and carbon may be subjected to mechanical milling to mix the sulfur-based active material, the Li-containing sulfide, the P-containing sulfide, and carbon. The mechanical milling may be performed, for example, by a ball mill. In this case, the conditions of the ball mill (rotation speed, processing time, number of processes, etc.) are not particularly limited.

### 3. Battery

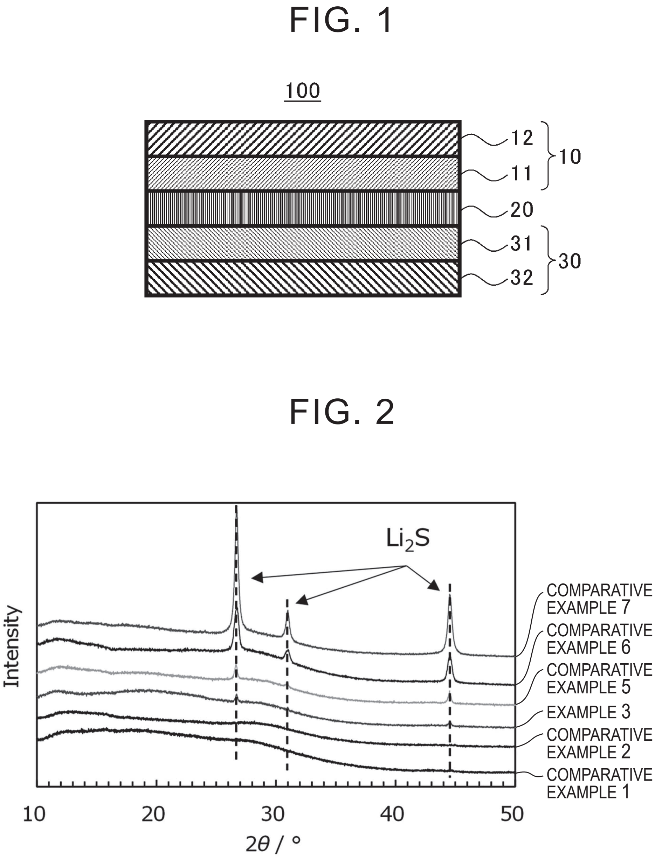

By using the cathode composite according to the present embodiment to form a battery, the battery has excellent capacity and cycle characteristics. As shown in FIG. 1, a battery 100 according to one embodiment includes a cathode composite layer 11, an electrolyte layer 20, and an anode 30. The cathode composite layer 11 is made of the above cathode composite.

### 3.1 Cathode

The shape and thickness of the cathode composite layer 11 in a cathode 10 are not particularly limited, and may be determined as appropriate in consideration of intended battery performance etc. The cathode composite layer 11 may be in the form of a sheet having a substantially flat surface. The thickness of the cathode composite layer 11 may be, for example, 0.1 µm or more, 1 µm or more, 10 µm or more, or 30 µm or more, and may be 2 mm or less, 1 mm or less, 500 µm or less, or 100 µm or less. As shown in FIG. 1, the cathode 10 of the battery 100 may include a cathode current collector 12 in contact with the cathode composite layer 11. The constituent material, shape, size, etc. of the cathode current collector 12 are not particularly limited.

### 3.2 Electrolyte Layer

The electrolyte layer 20 is disposed between the cathode composite layer 11 and the anode 30. The electrolyte layer 20 contains at least an electrolyte. The electrolyte layer 20 may contain at least one of a solid electrolyte and a liquid electrolyte (electrolytic solution), and may further optionally contain a binder etc. In particular, when the electrolyte layer 20 contains the solid electrolyte, higher performance is likely to be ensured. The electrolyte layer 20 may be a solid electrolyte layer that does not contain a liquid electrolyte. The solid electrolyte may be an inorganic solid electrolyte or an organic polymer electrolyte. In particular, the inorganic solid electrolyte is excellent in ion conductivity and heat resistance. Examples of the inorganic solid electrolyte include an oxide solid electrolyte, a sulfide solid electrolyte, and an ionic inorganic solid electrolyte. Among the inorganic solid electrolytes, sulfide solid electrolytes, and among them, sulfide solid electrolytes containing at least Li, S, and P as constituent elements, have high performance. Alternatively, among the inorganic solid electrolytes, ionic solid electrolytes, and among them, solid electrolytes containing at least Li, Y, and a halogen (at least one of Cl, Br, I, and F) as constituent elements, have high performance. The solid electrolyte may be amorphous or crystalline. The solid electrolyte may be particulate.

### 3.3 Anode

The anode 30 may include, for example, an anode active material layer 31 and an anode current collector 32 in contact with the anode active material layer 31. In one embodiment, the anode 30 may be one in which metallic lithium is precipitated during charging and metallic lithium is dissolved during discharging. In this case, metallic lithium is regarded as constituting the anode active material layer 31. In this case, "metallic lithium" is a concept that includes not only elemental lithium but also lithium alloys. That is, in the battery 100, metallic lithium may be precipitated as elemental lithium, or may be precipitated as an alloy together with other metals. Examples of the lithium alloy include Li-Mg, Li-Sn, Li-Al, Li-B, Li-C, Li-Si, Li-Ca, Li-Ga, Li-Ge, Li-As, Li-Se, Li-Ru, Li-Rh, Li-Pd, Li-Ag, Li-Au, Li-Cd, Li-In, Li-Sb, Li-Ir, Li-Pt, Li-Hg, Li-Pb, Li-Bi, Li-Zn, Li-Tl, Li-Te, and Li-At. The lithium alloy may be one type alone or two or more types. In this case, an intermediate layer may be present between the electrolyte layer 20 and the anode 30 for the purpose of achieving uniform precipitation and dissolution of metallic lithium. The type of the intermediate layer is not particularly limited, and may be a layer containing an element that can be alloyed with metallic lithium. The amount of metallic lithium precipitated between the electrolyte layer 20 and the anode current collector 32 is not particularly limited, and may be adjusted as appropriate depending on intended battery performance. Alternatively, the anode active material layer 31 contains an anode active material, and may optionally contain an electrolyte, a conductive aid, a binder, various additives, etc. The content of each component in the anode active material layer 31 may be determined as appropriate depending on intended battery performance. In this case, the shape of the anode active material layer 31 is not particularly limited, and may be, for example, a sheet shape having a substantially flat surface. In this case, the thickness of the anode active material layer 31 is not particularly limited, but may be, for example, 0.1 µm or more, 1 µm or more, 10 µm or more, or 30 µm or more, and may be 2 mm or less, 1 mm or less, 500 µm or less, or 100 µm or less. The anode active material may be any of those known as anode active materials for batteries. Examples of the anode active material include silicon-based active materials such as Si, Si alloys, and silicon oxide; carbon-based active materials such as graphite and hard carbon; various oxide-based active materials such as lithium titanate; and the above metallic lithium and lithium alloys. Alternatively, the anode active material may be metallic lithium in the form of a foil or film as described above. That is, the anode active material layer 31 may be made of a sheet of the anode active material. The electrolyte etc. that can be contained in the anode active material layer 31 are not particularly limited. The anode current collector 32 may be any current collector that can function as an anode current collector for a battery.

### 3.4 Others

In addition to the above components, the battery 100 may have general components for a battery. Examples of the components include tabs and terminals. The battery 100 may be a battery in which the above components are housed inside an outer casing. A plurality of batteries 100 may be electrically connected in any way and stacked in any way to form a battery pack. Examples of the shape of the battery 100 include a coin, a laminate, a cylinder, and a rectangle. The battery 100 may include a restraining member for restraining each of the above components in the thickness direction. The battery 100 may be a secondary battery. The battery 100 may be a lithium sulfur battery (LiS battery). The battery 100 may be an all-solid-state battery that is substantially free of liquid electrolyte. The battery 100 may be an all-solid-state lithium sulfur battery. The battery 100 can be manufactured by a known method, except that it includes the above cathode composite.

As described above, the cathode composite and the production method for the cathode composite according to one embodiment have been described, but the technology of the present disclosure may be modified in various ways other than the above embodiment without departing from the gist thereof. The technology of the present disclosure will be described in more detail below with reference to Examples. However, the technology of the present disclosure is not limited to Examples.

### 1. Production of Cathode Composite

Elemental sulfur (80°C vacuum dried product) serving as a sulfur-based active material, Li₂S serving as a Li-containing sulfide, P₂S₅ serving as a P-containing sulfide, and carbon nanotubes (120°C vacuum dried product) serving as a conductive material were weighed to have mass ratios shown in Table 1 and mixed in a mortar to obtain a mixture (1). Then, 1.7 g of the mixture (1) and 80 g of φ4 mm zirconia balls were added to each ball mill pot and mixed using a planetary ball mill at 400 rpm for 36 hours to obtain a mixture (2). After mixing using the planetary ball mill, the mixture (2) was dry classified using a 38 µm sieve to obtain a cathode composite for evaluation.

**Table 1**

| | | | | | | | | |
|---|---|---|---|---|---|---|---|---|
| | S → Li₂S substitution Molar percentage [mol%] | Mass ratio of S : Li₂S : P₂S₅ : C [mass%] | | | | Molar ratio Li/P | Molar ratio Li/S | Molar ratio C/S |
| | | S | Li₂S | P₂S₅ | C | | | |
| Comparative Example 1 | 0 | 42.0 | 0 | 35.0 | 23.0 | 0 | 0 | 0.91 |
| Comparative Example 2 | 20 | 32.4 | 11.6 | 33.8 | 22.2 | 1.66 | 0.25 | 0.91 |
| Example 1 | 25 | 30.1 | 14.4 | 33.5 | 22.0 | 2.08 | 0.31 | 0.91 |
| Example 2 | 30 | 27.9 | 17.1 | 33.2 | 21.8 | 2.50 | 0.38 | 0.91 |
| Example 3 | 33 | 26.4 | 18.9 | 33.0 | 21.7 | 2.77 | 0.42 | 0.91 |
| Comparative Example 3 | 40 | 23.5 | 22.5 | 32.6 | 21.4 | 3.33 | 0.50 | 0.91 |
| Comparative Example 4 | 45 | 21.4 | 24.9 | 32.4 | 21.3 | 3.74 | 0.56 | 0.91 |
| Comparative Example 5 | 50 | 19.2 | 27.6 | 32.1 | 21.1 | 4.16 | 0.63 | 0.91 |
| Comparative Example 6 | 80 | 7.3 | 42.0 | 30.6 | 20.1 | 6.66 | 1.00 | 0.91 |
| Comparative Example 7 | 100 | 0 | 50.9 | 29.6 | 19.5 | 8.32 | 1.25 | 0.91 |

### 2. Particle Size Distribution Measurement for Cathode Composite

Among the cathode composites produced as described above, the cathode composites according to Comparative Example 1 (Li₂S: 0 mol% substitution), Example 3 (Li₂S: 33 mol% substitution), and Comparative Example 7 (Li₂S: 100 mol% substitution) were subjected to particle size distribution measurement in a tetralin solvent using MT3300 manufactured by Microtrac. The results are shown in Table 2.

**Table 2**

| | Particle size [µm] | | |
|---|---|---|---|
| | Comparative Example 1 | Example 3 | Comparative Example 7 |
| D10 | 3.9 | 2.4 | 4.0 |
| D20 | 4.6 | 3.0 | 4.7 |
| D30 | 5.3 | 3.5 | 5.3 |
| D40 | 6.0 | 4.1 | 5.9 |
| D50 | 6.8 | 4.8 | 6.5 |
| D60 | 7.7 | 5.7 | 7.2 |
| D70 | 8.9 | 6.7 | 8.0 |
| D80 | 10.7 | 7.9 | 9.1 |
| D90 | 14.0 | 9.6 | 10.8 |
| D95 | 17.5 | 11.1 | 12.5 |

### 3. X-ray Diffraction Measurement for Cathode Composite

Among the cathode composites produced as described above, the cathode composites according to Comparative Example 1 (Li₂S: 0 mol% substitution), Comparative Example 2 (Li₂S: 20 mol% substitution), Example 3 (Li₂S: 33 mol% substitution), Comparative Example 5 (Li₂S: 50 mol% substitution), Comparative Example 6 (Li₂S: 80 mol% substitution), and Comparative Example 7 (Li₂S: 100 mol% substitution) were placed in a non-exposure jig to prevent exposure to the atmosphere, and X-ray diffraction patterns were obtained using Ultima IV manufactured by Rigaku Corporation with CuKα radiation in a range of 2θ = 10° to 50°. The results are shown in FIG. 2.

### 4. ³¹P Solid-state NMR Measurement for Cathode Composite

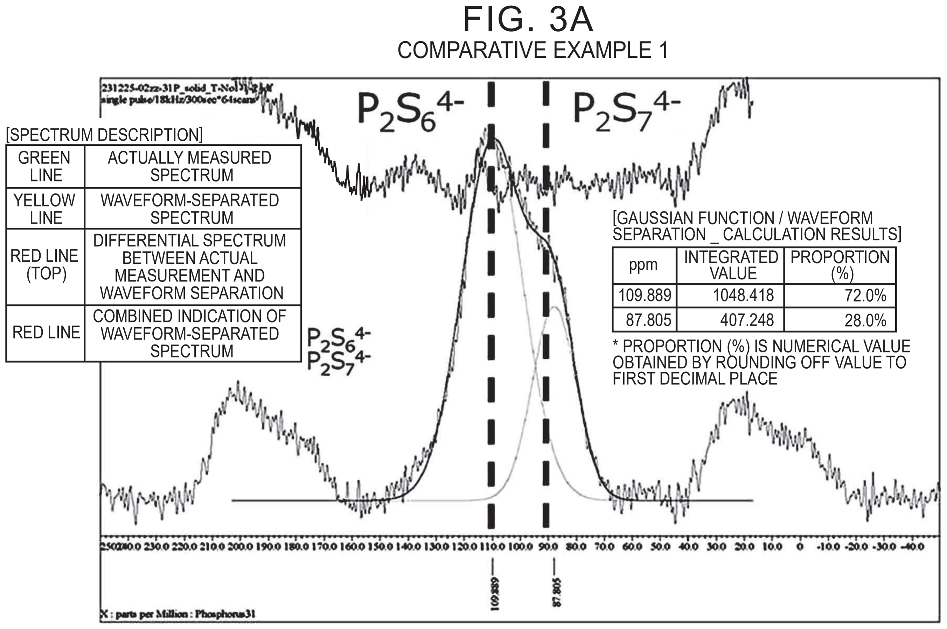

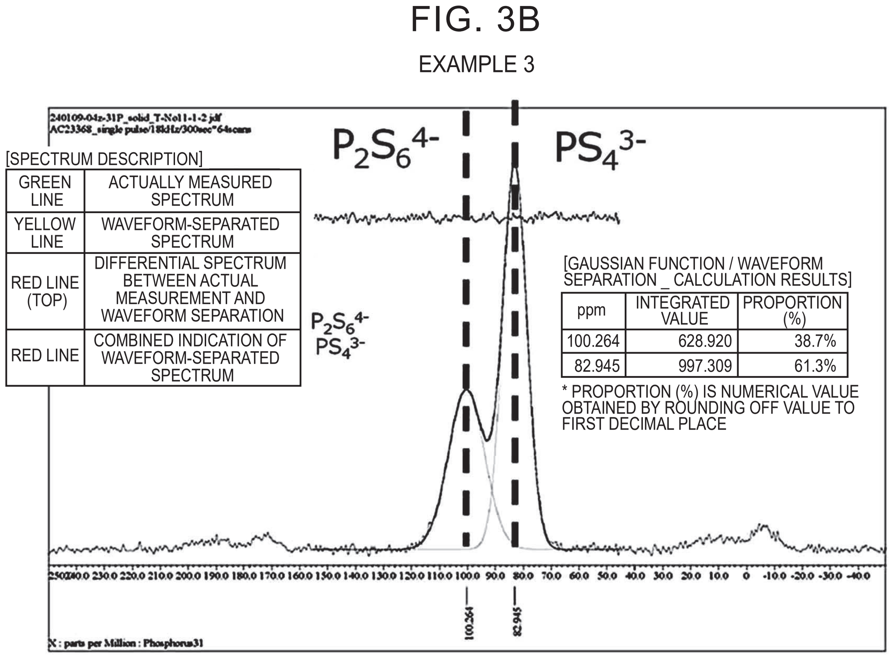

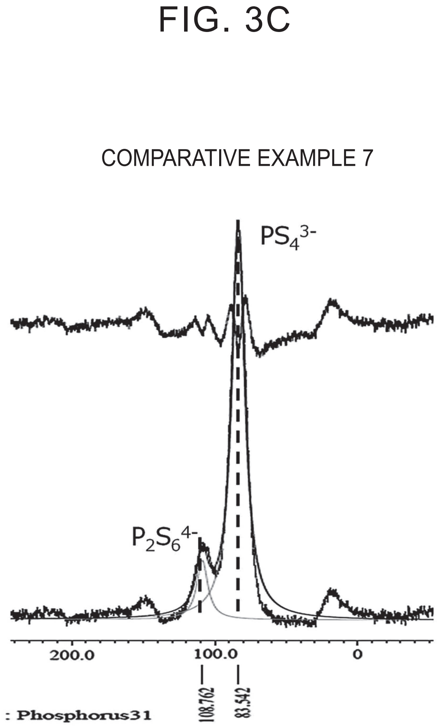

Among the cathode composites produced as described above, the cathode composites according to Comparative Example 1 (Li₂S: 0 mol% substitution), Example 3 (Li₂S: 33 mol% substitution), and Comparative Example 7 (Li₂S: 100 mol% substitution) were subjected to ³¹P solid-state NMR measurement. The measurement conditions have been described in the embodiment of the present specification. The results are shown in FIGS. 3A to 3C.

In each ³¹P solid-state NMR spectrum, the "integrated intensity I1 of the peak derived from P₂S₆⁴⁻," the "integrated intensity I2 of the peak derived from PS₄³⁻," and an "integrated intensity I3 of the peak derived from P₂S₇⁴⁻" were determined. The peak derived from P₂S₆⁴⁻ is a peak that appears at 105 ppm to 115 ppm, the peak derived from PS₄³⁻ is a peak that appears at 80 ppm to 84 ppm, and the peak derived from P₂S₇⁴⁻ is a peak that appears at 85 ppm to 95 ppm. The results are shown in Table 3.

### 5. Production of Press Cell A

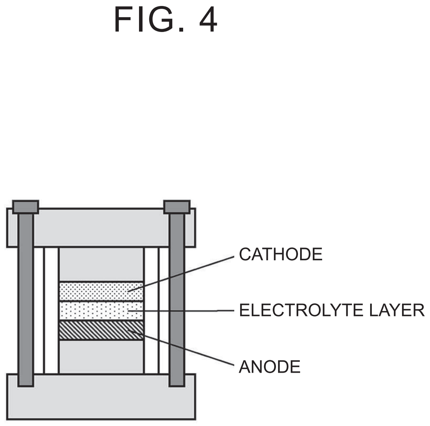

Among the cathode composites produced as described above, the cathode composites according to Comparative Example 1 (Li₂S: 0 mol% substitution) and Example 3 (Li₂S: 33 mol% substitution) were used to produce a press cell A having a diameter of 11.28 mm according to the following procedure. The configuration of the produced press cell A is shown in FIG. 4.
(1) A sulfide solid electrolyte was placed at 120 mg in a cell, pressed at 1 ton, and held for 1 minute, and then pressed at 4 tons without releasing the pressure and held for 1 minute.
(2) A Li-10 wt% Mg alloy foil (thickness: 100 µm) punched to a diameter of 11.28 mm and a Ni foil were placed in this order under the sulfide solid electrolyte layer in the cell, pressed at 1 ton, and held for 10 seconds.
(3) The cathode composite was placed at 15.3 mg in a three-section press jig having a diameter of 8 mm, pressed at 3 tons, and held for 1 minute to obtain a cathode composite pellet.
(4) The obtained cathode composite pellet was taken out, and burrs were removed.
(5) The cathode composite pellet and an Al foil punched to a diameter of 11.28 mm were placed above the sulfide solid electrolyte layer in the cell.
(6) The product was restrained to a fixed size at a restraining pressure of 2 Nm (equivalent to about 30 MPa) to obtain the press cell A for evaluation.

### 6. ³¹P Solid-state NMR Measurement for Cathode Composite after Discharging

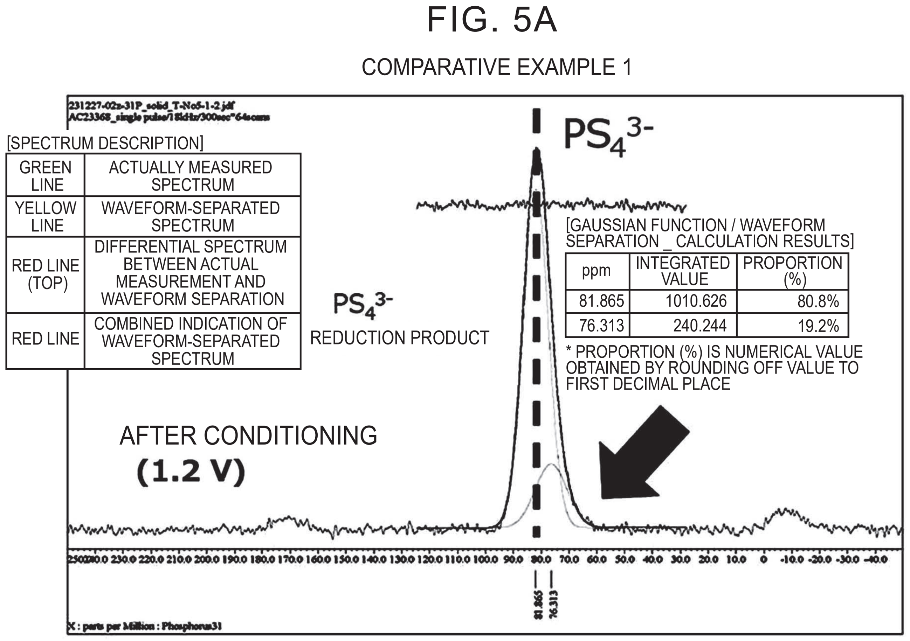

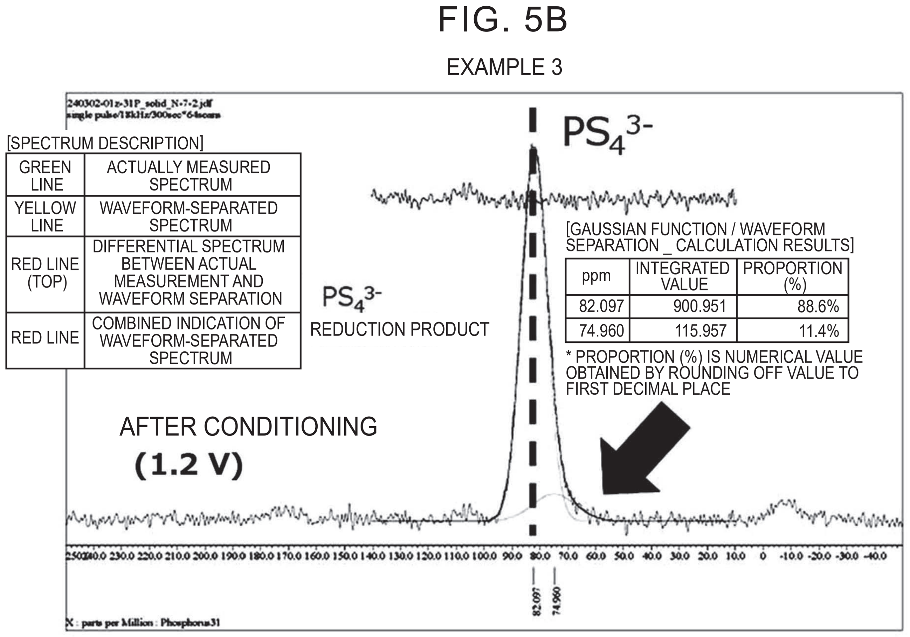

The press cell A produced as described above was subjected to a constant current discharging test at 60°C with a current density of 0.298 mA/cm² equivalent to 0.025 C (1 C = 11.93 mA/cm²). The lower cutoff potential was set to 1.2 V vs Li⁺/Li, and after reaching that potential, the potential was maintained for 1 hour. Then, the cathode composite pellet was collected from the press cell A, and was crushed and mixed in a mortar to obtain a cathode composite powder. The obtained cathode composite powder was subjected to ³¹P solid-state NMR measurement. The measurement conditions have been described in the embodiment of the present specification. The results are shown in FIG. 5A and FIG. 5B.

In each ³¹P solid-state NMR spectrum, the "integrated intensity I3 of the peak derived from P₂S₇⁴⁻" and an "integrated intensity I4 of the peak derived from a reduction product" were determined. The peak derived from P₂S₇⁴⁻ is a peak that appears at 85 ppm to 95 ppm, and the peak derived from the reduction product is a peak that appears at 70 ppm to 78 ppm. The results are shown in Table 3.

### 7. Production of Press Cell B

The cathode composites produced as described above were used to produce a press cell B having a diameter of 11.28 mm according to the following procedure. The configuration of the produced press cell B is similar to that of the press cell A and is shown in FIG. 4.
(1) A sulfide solid electrolyte was placed at 100 mg in a cell and pressed at 1 ton.
(2) The cathode composite was placed at 7.6 mg above the sulfide solid electrolyte layer in the cell and pressed at 1 ton.
(3) An Al foil punched to a diameter of 11.28 mm was placed above the cathode composite layer in the cell and pressed at 6 tons.
(4) A Li-10 wt% Mg alloy foil (thickness: 100 µm) punched to a diameter of 11.28 mm and a Ni foil were placed in this order under the sulfide solid electrolyte layer in the cell, and pressed at 1 ton.
(5) The product was restrained to a fixed size at a restraining pressure of 2 Nm (equivalent to about 30 MPa) to obtain the press cell B for evaluation.

### 8. Electrochemical Measurement

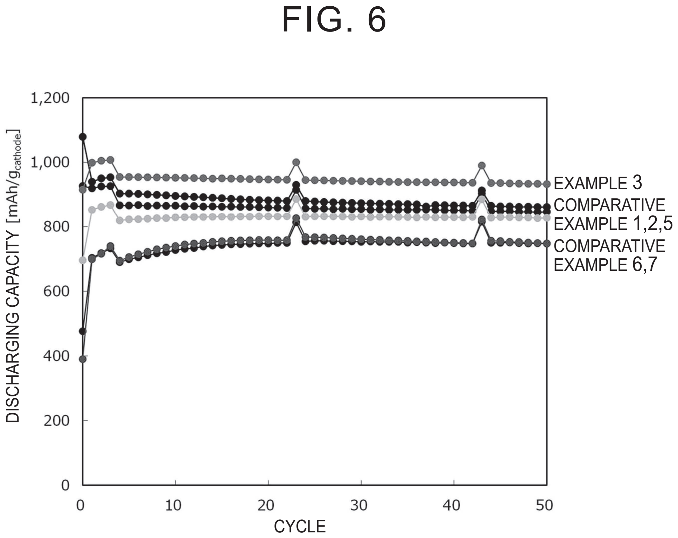

The press cell B produced as described above was subjected to a constant current charging/discharging test at 60°C according to the following protocol, with the upper cutoff potential for charging set to 3.1 V, the lower cutoff potential for discharging set to 1.2 V vs Li⁺/Li, and 1 C = 5.84 mA/cm². Table 3 shows a discharging capacity C₀ during conditioning in the constant current charging/discharging test, a discharging capacity C₁ in a first cycle after the conditioning in the constant current charging/discharging test, and a discharging capacity C₅₀ in a 50th cycle. Each discharging capacity is calculated on a Li-free basis, that is, the specific capacity is calculated by excluding the weight of Li in Li₂S in the prepared composition and regarding the resultant weight as the weight of the cathode composite. FIG. 6 shows the discharging capacities per cycle for Comparative Example 1 (Li₂S: 0 mol% substitution), Comparative Example 2 (Li₂S: 20 mol% substitution), Example 3 (Li₂S: 33 mol% substitution), Comparative Example 5 (Li₂S: 50 mol% substitution), Comparative Example 6 (Li₂S: 80 mol% substitution), and Comparative Example 7 (Li₂S: 100 mol% substitution).
(1) Conditioning (1.2 V discharging) and first to third cycles: current density of 0.584 mA/cm² equivalent to 0.1 C
(2) Fourth to 22nd cycles: current density of 1.168 mA/cm² equivalent to 0.2 C
(3) 23rd cycle: current density of 0.584 mA/cm² equivalent to 0.1 C
(4) 24th to 42nd cycles: current density of 1.168 mA/cm² equivalent to 0.2 C
(5) 43rd cycle: current density of 0.584 mA/cm² equivalent to 0.1 C
(6) 44th to 50th cycles: current density of 1.168 mA/cm² equivalent to 0.2 C

### 9. Evaluation Results

Table 3 shows the molar ratio Li/P, the molar ratio Li/S, and the molar ratio C/S in the cathode composite, the integrated intensities I1 to I3 determined from the ³¹P solid-state NMR spectrum, the integrated intensities I3 and I4 determined from the ³¹P solid-state NMR spectrum of the cathode composite after discharging using the press cell A, and the discharging capacity C₀ during the initial conditioning, the discharging capacity C₁ in the first cycle, and the discharging capacity C₅₀ in the 50th cycle for the press cell B.

**Table 3**

| | Molar ratio Li/P | Molar ratio Li/S | Molar ratio C/S | Integrated intensity (immediately after production) | | | | Integrated intensity (after discharging) | | Discharging capacity (mAh/g cathode) | | |
|---|---|---|---|---|---|---|---|---|---|---|---|---|
| | | | | 11 | 12 | 13 | I1/I2 | 13 | 14 | C₀ | C₁ | C₅₀ |
| Comparative Example 1 | 0 | 0 | 0.91 | 72.0 | 0 | 28.0 | - | 80.8 | 19.2 | 1079 | 940 | 861 |
| Comparative Example 2 | 1.66 | 0.25 | 0.91 | - | - | - | - | - | - | 927 | 919 | 847 |
| Example 1 | 2.08 | 0.31 | 0.91 | - | - | - | - | - | - | 1032 | 1058 | 936 |
| Example 2 | 2.50 | 0.38 | 0.91 | - | - | - | - | - | - | 961 | 1008 | 933 |
| Example 3 | 2.77 | 0.42 | 0.91 | 38.7 | 61.3 | 0 | 0.6 | 88.6 | 11.4 | 915 | 999 | 932 |
| Comparative Example 3 | 3.33 | 0.50 | 0.91 | - | - | - | - | - | - | 725 | 815 | 770 |
| Comparative Example 4 | 3.74 | 0.56 | 0.91 | - | - | - | - | - | - | 706 | 810 | 761 |
| Comparative Example 5 | 4.16 | 0.63 | 0.91 | - | - | - | - | - | - | 696 | 853 | 827 |
| Comparative Example 6 | 6.66 | 1.00 | 0.91 | - | - | - | - | - | - | 476 | 704 | 748 |
| Comparative Example 7 | 8.32 | 1.25 | 0.91 | 14.0 | 86.0 | 0 | 0.2 | - | - | 390 | 699 | 748 |

The results shown in Tables 1 to 3 and FIGS. 2 to 6 demonstrate the following.

First, from the X-ray diffraction pattern shown in FIG. 2, when elemental sulfur in the cathode composite is substituted with lithium sulfide (Li₂S) at a predetermined molar ratio, the cathode composite is substantially amorphous up to a Li₂S substitution ratio of 33 mol%, and when the Li₂S substitution ratio exceeds 33 mol%, the peak derived from Li₂S increases and the peak intensity increases as the substitution ratio increases. This suggests that, up to the substitution ratio of about 33 mol%, the added Li₂S is consumed in the self-formation of an amorphous lithium ion conduction phase (Li₃PS₄). This is also reasonable because, in the ³¹P solid-state NMR spectrum of the cathode composite immediately after the production in FIGS. 3A to 3C, the peak derived from P₂S₇⁴⁻ present in the cathode composite with the Li₂S substitution ratio of 0 mol% disappears in the cathode composite with the Li₂S substitution ratio of 33 mol%, and a peak derived from PS₄³⁻ is generated instead.

As shown in Table 2, the particle size distribution of the cathode composite, including D50, is approximately the same at the Li₂S substitution ratios of 0 mol% and 100 mol%, while at the substitution ratio of 33 mol%, the frequency of small particle sizes increases and D50 decreases. This is presumably because, when the cathode composite is produced with an appropriate Li₂S substitution ratio, the particle size of the cathode composite specifically decreases due to the reaction for generating the amorphous lithium ion conduction phase. When the Li₂S substitution ratio is 100 mol%, the frequency of small particle sizes does not increase, suggesting that simply increasing the Li₂S substitution ratio to promote the generation of the lithium ion conduction phase is not necessarily appropriate.

As shown in Table 3 and FIG. 6, the discharging capacity in the initial conditioning tends to decrease as the Li₂S substitution ratio increases. This is presumably because the reaction for generating the lithium ion conduction phase and the electrochemical reaction for inserting Li into elemental sulfur during the initial conditioning were replaced by the Li₂S substitution. After the conditioning, the discharging capacities in the first and 50th cycles are maximum when the Li₂S substitution ratio is 25 mol% to 33 mol% (Examples 1 to 3). The cycle characteristics after the conditioning are excellent regardless of the Li₂S substitution ratio. As shown in FIG. 5A and FIG. 5B, in the Li-inserted state after the conditioning (1.2 V), a peak (shoulder) that is thought to be a peak derived from a PS₄³⁻reduction product appears at a chemical shift slightly smaller than the peak derived from PS₄³⁻, but the proportion is substantially the same at the Li₂S substitution ratios of 0 mol% and 33 mol%. That is, both are in substantially the same chemical state after the conditioning, and the difference in discharging capacity thereafter is presumably due to the lithium ion conduction phase (Li₃PS₄) and the dispersion state of the active material.

The reason why the discharging capacity decreases when the Li₂S substitution ratio exceeds 33 mol% is that Li₂S is present as crystallites as detected by XRD, and compared to Li₂S produced by the electrochemical reaction for inserting Li into elemental sulfur, Li₂S prepared as a raw material is not fully utilized as an active material (although it is effective in producing amorphous Li₃PS₄).

### 10. Summary

To summarize the above results, it is believed that, with the cathode composite that satisfies the following conditions (A) to (C), the generation of the amorphous lithium ion conduction phase and the specific decrease in particle size lead to improvement in the dispersion state of the lithium ion conduction paths and the sulfur-based active material, an increase in utilization rate of the sulfur-based active material, and achievement of both high capacity and good cycle characteristics.
(A) The cathode composite contains the sulfur-based active material, the Li-containing sulfide, the P-containing sulfide, and carbon.
(B) The molar ratio Li/P of Li to P in the cathode composite is 1.70 or more and 3.30 or less.
(C) The molar ratio Li/S of Li to S in the cathode composite is more than 0.25 and less than 0.50.

## Claims

1. A cathode composite comprising a sulfur-based active material, a Li-containing sulfide, a P-containing sulfide, and carbon, wherein:
a molar ratio Li/P of Li to P in the cathode composite is 1.70 or more and 3.30 or less; and
a molar ratio Li/S of Li to S in the cathode composite is more than 0.25 and less than 0.50.

2. The cathode composite according to claim 1, further comprising:
D10 that is 1.0 µm or more and less than 3.0 µm;
D50 that is 3.0 µm or more and less than 6.0 µm; and
D90 that is 6.0 µm or more and 10.0 µm or less.

3. The cathode composite according to claim 1, wherein a ³¹P solid-state NMR spectrum of the cathode composite satisfies a relationship (1):$I 1 / I 2 \leq 1.0$
where I1 is an integrated intensity of a peak derived from P₂S₆⁴⁻, and
I2 is an integrated intensity of a peak derived from PS₄³⁻.

4. The cathode composite according to claim 1, wherein a molar ratio C/S of C to S in the cathode composite is 0.50 or more and 1.50 or less.

5. A production method for a cathode composite, the production method comprising mixing a sulfur-based active material, a Li-containing sulfide, a P-containing sulfide, and carbon to obtain a mixture, wherein:
a molar ratio Li/P of Li to P in the mixture is 1.70 or more and 3.30 or less; and
a molar ratio Li/S of Li to S in the mixture is more than 0.25 and less than 0.50.
